(19) Europäisches Patentamt
European Patent Office
Office européen des brevets

(11) **EP 4 751 932 A1**

(12) **EUROPEAN PATENT APPLICATION**

(43) Date of publication:
**03.06.2026 Bulletin 2026/23**

(21) Application number: 25213350.9

(22) Date of filing: **04.11.2025**

(51) International Patent Classification (IPC):
**B60C 1/00** (2006.01)    **B60C 9/07** (2006.01)
**B60C 9/08** (2006.01)    **B60C 9/20** (2006.01)
**B60C 11/00** (2006.01)    **B60C 11/03** (2006.01)

(52) Cooperative Patent Classification (CPC):
**B60C 11/005; B60C 1/0016; B60C 9/07;
B60C 9/08; B60C 9/2009; B60C 11/0306;
B60C 11/033;** B60C 2009/2016; B60C 2011/0025

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.11.2024 JP 2024208899
29.08.2025 JP 2025143589**

(71) Applicant: **SUMITOMO RUBBER INDUSTRIES,
LTD.**
**Kobe-shi, Hyogo 651-0072 (JP)**

(72) Inventors:
• **TAKATA, Yoshiki**
  **Chuo-ku, Kobe-shi, Hyogo, 651-0072 (JP)**
• **IMAI, Daiki**
  **Chuo-ku, Kobe-shi, Hyogo, 651-0072 (JP)**

(74) Representative: **TBK**
**Bavariaring 4-6**
**80336 München (DE)**

(54) **PNEUMATIC TIRE**

(57)    Provided is a pneumatic tire comprising a carcass, a reinforcing layer, and a cap tread, wherein the following inequalities are satisfied,

(1)
$$|A_2 - A_1| > 0$$

(2)
$$L_1 / L_2 > 0.30$$

(3)
$$30°CE^*c > K / \{|A_2 - A_1| \times (L_1 - L_2 \times 0.3)\}$$

(where K is 310)
where $A_1$ represents an angle, in degrees, at which a carcass cord inclines from a tire circumferential direction at a position on a tire center line, $A_2$ represents an angle, in degrees, at which the carcass cord inclines from the tire circumferential direction at a tire maximum width position, $L_1$ represents a land ratio, in %, of a region including a tire equator, $L_2$ represents a land ratio, in %, of a pair of regions including tread ends, $30°CE^*c$ represents a complex elastic modulus at 30°C of a rubber composition constituting the cap tread, and K represent a constant.

FIG. 3

**Description**

TECHNICAL FIELD

The present invention relates to a pneumatic tire.

BACKGROUND OF THE INVENTION

A carcass ply forms a skeleton in a pneumatic tire. For a carcass cord constituting the carcass ply, types of tires such as a radial tire, a bias tire, and the like are distinguished by its extending direction, and performances such as durability, rigidity, and the like of the pneumatic tire are determined by the carcass cord. JP 2023-84469 A and WO 2021/123530 describe a pneumatic tire with carcass cords flexed by controlling the direction in which the carcass cords extend.

SUMMARY OF THE INVENTION

Such a pneumatic tire can be imparted with desired performances by controlling and changing a direction in which carcass cords extend. However, energy loss occurs due to a change in the extending direction of carcass cord during running, and there is a concern about deterioration in fuel efficiency of the tire.
It is an object of the present invention to suppress deterioration in durability of a pneumatic tire comprising carcass cords whose extending direction varies.
That is, the present invention relates to the following pneumatic tire:

a pneumatic tire comprising
a carcass,
a reinforcing layer arranged on the outer side of the carcass in a tire radial direction, and
a cap tread arranged on the outer side of the reinforcing layer in the tire radial direction,
wherein the carcass is composed of at least one carcass ply that comprises a plurality of carcass cords and a topping rubber covering the carcass cords, and
wherein $A_1$, $A_2$, $L_1$, $L_2$, 30°CE*c, and K satisfy the following inequalities (1), (2), and (3),

$$(1)\ |A_2 - A_1| > 0$$

$$(2)\ L_1 / L_2 > 0.30$$

$$(3)\ 30°CE^*c > K / \{|A_2 - A_1| \times (L_1 - L_2 \times 0.3)\}\ \text{(where K is 310)}$$

where $A_1$ represents an angle, in degrees, at which an extending direction of carcass cord of at least any carcass ply among the carcass plies inclines from a tire circumferential direction at a position on a tire center line, $A_2$ represents an angle, in degrees, at which the extending direction of carcass cord of the at least any carcass ply among the carcass plies inclines from the tire circumferential direction at a tire maximum width position, $L_1$ represents a land ratio, in %, of a predetermined region of the cap tread including a tire equator, $L_2$ represents a land ratio, in %, of a pair of predetermined regions including tread ends of the cap tread, 30°CE*c represents a complex elastic modulus at 30°C of a rubber composition constituting the cap tread, and K represent a constant.

According to the present invention, deterioration in durability of a pneumatic tire comprising carcass cords whose extending direction varies can be suppressed.

BRIEF DESCRIPTION OF THE DRAWINGS

FIG. 1 is a cross-sectional view of a pneumatic tire relating to one embodiment of the present invention which passes through a tire rotation axis.
FIG. 2 is a view schematically showing a tread pattern of a tire relating to one embodiment of the present invention.

FIG. 3 is one example of a developed view of carcass cords constituting a carcass ply of a pneumatic tire relating to one embodiment of the present invention, which shows an angle formed between an extending direction of carcass cord and a tire circumferential direction.

FIG. 4 is a variation of a developed view of carcass cords constituting a carcass ply of a pneumatic tire relating to one embodiment of the present invention, which shows an angle formed between an extending direction of carcass cord and the tire circumferential direction.

FIG. 5 is a schematic view showing, for a carcass cord constituting a carcass ply of a pneumatic tire relating to one embodiment of the present invention, a preferred range of angle formed between an extending direction of carcass cord and the tire circumferential direction.

DETAILED DESCRIPTION

A pneumatic tire that is one embodiment of the present invention will be described below. The pneumatic tire of the present embodiment is a pneumatic tire comprising a carcass, a reinforcing layer arranged on the outer side of the carcass in a tire radial direction, and a cap tread arranged on the outer side of the reinforcing layer in the tire radial direction, wherein the carcass is composed of at least one carcass ply that comprises a plurality of carcass cords and a topping rubber covering the carcass cords, and wherein $A_1$, $A_2$, $L_1$, $L_2$, $30°CE*c$, and K satisfy the following inequalities (1), (2), and (3),

$$(1)\ |A_2 - A_1| > 0$$

$$(2)\ L_1 / L_2 > 0.30$$

$$(3)\ 30°CE*c > K / \{|A_2 - A_1| × (L_1 - L_2 × 0.3)\}\ \text{(where K is 310)}$$

where $A_1$ represents an angle, in degrees, at which an extending direction of carcass cord of at least any carcass ply among the carcass plies inclines from a tire circumferential direction at a position on a tire center line, $A_2$ represents an angle, in degrees, at which the extending direction of carcass cord of the at least any carcass ply among the carcass plies inclines from the tire circumferential direction at a tire maximum width position, $L_1$ represents a land ratio, in %, of a predetermined region of the cap tread including a tire equator, $L_2$ represents a land ratio, in %, of a pair of predetermined regions including tread ends of the cap tread, $30°CE*c$ represents a complex elastic modulus at 30°C of a rubber composition constituting the cap tread, and K represent a constant.

Although it is not intended to be bound by a theory, in the present invention, the following can be considered as a reason why deterioration of durability is suppressed. That is, although strain concentrates on a part of a carcass cord that flexes during running, the strain can be dispersed by securing a land ratio of a region of a tread located on that part. Additionally, an extending direction of carcass cord, a land ratio of a region of the tread located in the vicinity of the part of the carcass cord that flexes, and a complex elastic modulus at 30°C of a rubber composition constituting the cap rubber are adjusted so that predetermined relational inequalities are satisfied, whereby it is considered that deterioration in durability of the tire is suppressed.

K is preferably 335 in the inequality (3).

This is because the inequality (3) is satisfied under a stricter condition.

It is preferable that the rubber composition constituting the cap tread comprises a rubber component and that the rubber component comprises a styrene-butadiene rubber.

When the rubber composition constituting the cap tread comprises a styrene-butadiene rubber, it is considered that durability of the tire is further improved.

The rubber composition constituting the cap tread preferably comprises a resin component.

When the rubber composition comprises a resin component, the complex elastic modulus at 30°C of the cap tread is adequately adjusted, and it is considered that durability of the tire is further improved.

It is preferable that the reinforcing layer is composed of at least one reinforcing layer ply that comprises a plurality of reinforcing layer cords and a topping rubber covering the reinforcing layer cords and that, when $A_{RF}$ represents an angle, in degrees, at which an extending direction of reinforcing layer cord of at least any reinforcing layer ply of the reinforcing layer inclines from the tire circumferential direction, $A_1$ described above is different from $A_{RF}$.

When such a structure as described above is used, strain can be effectively dispersed, so that it is considered that durability of the tire is further improved.

The inclination direction at $A_{RF}$ from the tire circumferential direction is preferably a direction opposite to the

inclination direction at $A_1$ from the tire circumferential direction.

When such a structure as described above is used, strain can be effectively dispersed, so that it is considered that durability of the tire is further improved.

The reinforcing layer comprising the reinforcing layer ply in which an angle, in degrees, at which an extending direction of reinforcing layer cord inclines from the tire circumferential direction is $A_{RF}$ is preferably composed of one reinforcing layer ply.

When the number of reinforcing layer plies is decreased, it is considered that the weight of the tire can be reduced.

The reinforcing layer ply in which the angle, in degrees, at which the extending direction of reinforcing layer cord inclines from the tire circumferential direction is $A_{RF}$ is preferably a belt ply.

When the reinforcing layer ply is a belt ply, it is considered that the number of the reinforcing layer plies can be minimized as required.

The at least one reinforcing layer preferably consists of a belt.

When the number of types of reinforcing layers is decreased, it is considered that the weight of the tire can be reduced.

The carcass is preferably composed of one carcass ply.

When the number of carcass plies is decreased, it is considered that the weight of the tire can be reduced.

$A_2$ is preferably +70° or higher and +90° or lower or is preferably - 70° or lower and higher than -90°.

When a range of $A_2$ is as described above, the effects of the present invention can be improved.

<Definition>

A "standardized state" is a state in which a tire is rim-assembled to a standardized rim, filled with air at a standardized internal pressure, and applied with no load. Unless otherwise noted, a tire in a standardized state is used.

A "dimension of each part of a tire" is a value specified in a standardized state for one appearing on the outer surface of the tire, unless otherwise specified, while it is a value specified, for example, in a condition where the tire is cut on a plane including a tire rotation axis and the cut tire piece is held with a rim width of a standardized rim, for one present inside the tire or on a tire cutting surface.

A "standardized rim" is a rim, in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire that is not defined by the standard, the "standardized rim" shall refer to a rim having the narrowest rim width among rims that can be rim-assembled to the tire, that can maintain an internal pressure (that is, do not cause air leakage between the rim and the tire), and that have the smallest rim diameter.

A "standardized internal pressure" is an air pressure, in a standard system including a standard on which the tire is based, defined for each tire by the standard, and, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load, in kg" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by a calculation is defined as a standardized load.

A "maximum load capacity $W_L$, in kg" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load described above.

$$W_L = 0.000011 \times V + 175$$

$$V = \{(Dt/2)^2 - (Dt/2 - Ht)^2\} \times \pi \times Wt$$

A "ground-contacting surface of a tread" is a region of a tread obtained from a contour when a tire is pressed against the ground. The ground-contacting surface can be obtained by assembling the tire to a standardized rim, filling the tire with air at a standardized internal pressure, and leaving the tire to stand at 25°C for 24 hours, followed by applying ink to a cap tread surface, applying a standardized load (a load equal to the maximum load capacity) on the tire to perpendicularly press the cap tread surface on cardboard (a camber angle at 0°), and performing transcription of the ink.

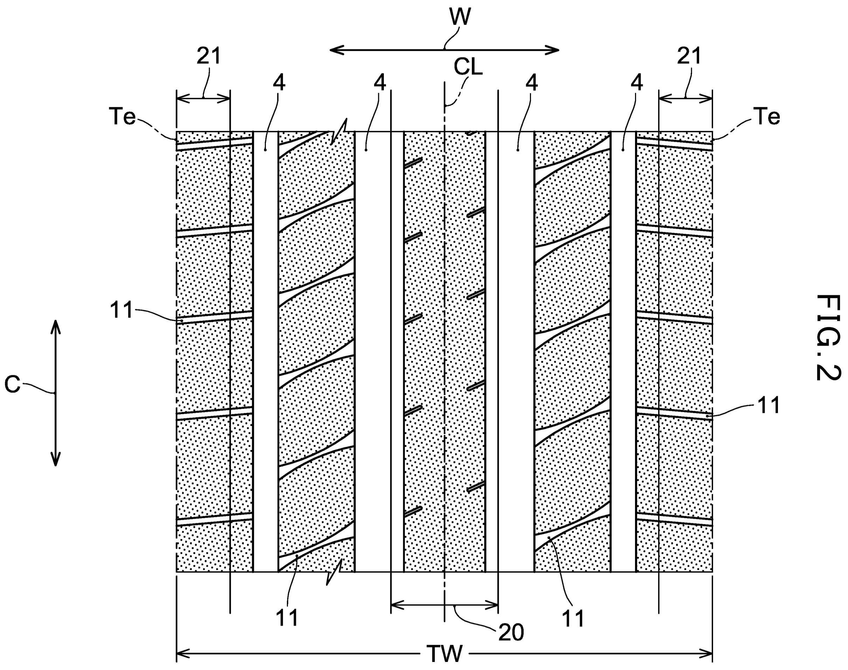

A "tread end" refers to an outermost end in a tire width direction with which a tire touches the ground when the tire is pressed against the ground. The tread end can be determined by assembling the tire to a standardized rim, filling the tire with air at a standardized internal pressure, and leaving the tire to stand at 25°C for 24 hours, followed by applying ink to a cap tread surface, applying a standardized load (a load equal to the maximum load capacity) on the tire to perpendicularly press the cap tread surface on cardboard (a camber angle is 0°), and performing transcription of the ink. In FIG. 2, the tread end is denoted by Te.

A "tread ground-contacting width" is a maximum width of a ground-contacting surface of a tread in a tire width direction. In FIG. 2, the tread ground-contacting width is denoted by TW.

An "effective ground-contacting region" is a region to which ink is applied, the effective ground-contacting region being obtained by assembling a tire to a standardized rim, filling the tire with air at a standardized internal pressure, and leaving the tire to stand at 25°C for 24 hours, followed by applying ink to a cap tread surface, applying a standardized load (a load equal to the maximum load capacity) on the tire to perpendicularly press the cap tread surface on cardboard (a camber angle is 0°), and performing transcription of the ink.

A "predetermined region of a cap tread including a tire equator" refers to a region in which distances from the tire equator to both outer sides in a tire width direction in a tread ground-contacting surface are 10% of a tread ground-contacting width.

A "pair of predetermined regions including tread ends of a cap tread" refers to a pair of regions in which distances from the respective tread ends to the inner side in a tire width direction in a tread ground-contacting surface are 10% of a tread ground-contacting width.

A "land ratio $L_1$ of a predetermined region including a tire equator" is calculated from a total area regarding the ground-contacting surface of the tread and an effective ground-contacting area regarding the effective ground-contacting region by the following equation,

$L_1$ = (effective ground-contacting area of predetermined region including tire equator/total area of predetermined region including tire equator) $\times$ 100.

A "land ratio $L_2$ of a pair of predetermined regions including tread ends" is calculated from a total area regarding the ground-contacting surface of the tread and an effective ground-contacting area regarding the effective ground-contacting region by the following equation,

$L_2$ = (effective ground-contacting area of pair of predetermined regions including tread ends/total area of pair of predetermined regions including tread ends) $\times$ 100.

A "groove" refers to a recessed part formed on a cap tread (and extending toward the inner side in a tire radial direction).

A "circumferential groove" refers to a groove extending continuously in a tire circumferential direction. The circumferential groove may extend linearly along the circumferential direction or may extend in a wavy, sinusoidal, or zigzag shape along the circumferential direction.

A "land part" means a part of a tread that is partitioned off by a circumferential groove and a tread end and a part at which a tire touches the ground when the tire is pressed against the ground. The land part is an effective ground-contacting region in a ground-contacting surface of the tread.

A "carcass" means a member forming a tire skeleton and is composed of at least one carcass ply that comprises a plurality of carcass cords and a topping rubber covering the carcass cords. An inner member is present on the inner side of the carcass in the tire radial direction. Examples of the inner member include an inner liner, an insulation, and the like.

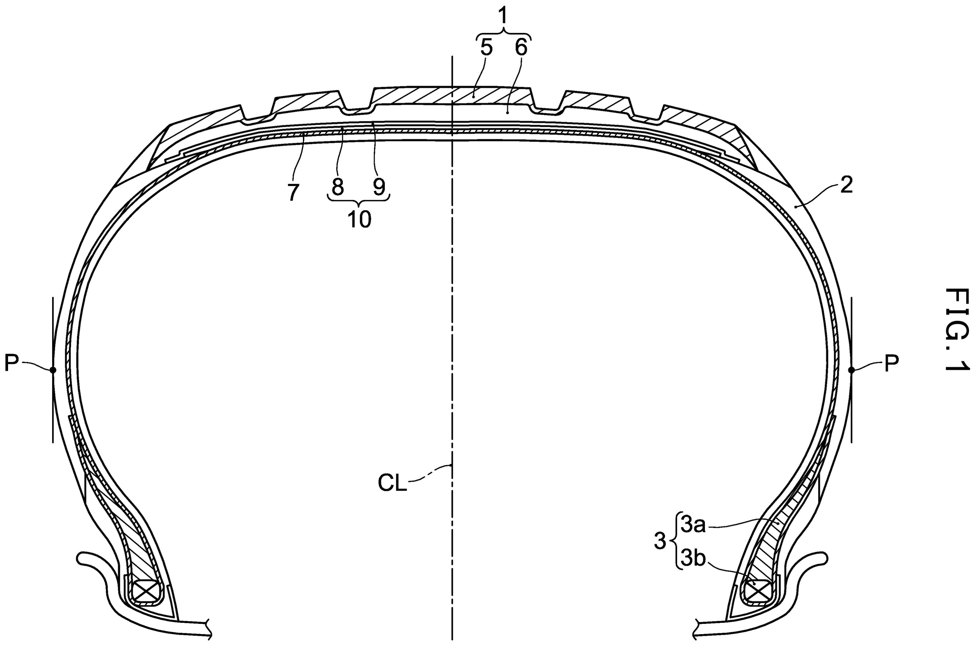

A "tire maximum width position" refers to a position at which a tire has the maximum width on a cross section in a tire width direction, the maximum width being measured in a standardized state. The tire maximum width position is denoted by P in FIG. 1.

An "R1 region" refers to a region in which an inclination angle of a carcass cord that is $A_1$ on a tire center line is within a predetermined fluctuation range. A fluctuation range of an inclination angle of a carcass cord allowed in the R1 region means a range of -10% or more and 5% or less for an absolute value of $A_1$ ($|A_1|$). The R1 region straddles the tire center line and does not include a tire maximum width position that is a position at which $A_2$ is measured.

"$A_1$" means an angle, in degrees, at which an extending direction of carcass cord inclines from a tire circumferential direction at a position on a tire center line and is expressed in a range of higher than -90° and +90° or lower, where the angle is regarded as plus (+) when the extending direction of carcass cord inclines downward to the right with respect to the tire circumferential direction and the angle is regarded as minus (-) when the extending direction of carcass cord inclines upward to the right with respect to the tire circumferential direction, when the tire is viewed from the inner-surface side. In a case where there are a plurality of applicable carcass plies, a carcass ply on the outermost side in the tire radial direction is preferably measured. FIG. 2 shows a case where $A_1$ is plus (+). Besides, in a case where its value is a plus value, the symbol "+" may be omitted.

"$A_2$" means an angle, in degrees, at which an extending direction of carcass cord inclines from a tire circumferential direction at a tire maximum width position and is expressed in a range of higher than -90° and +90° or lower, where the angle is regarded as plus (+) when the extending direction of carcass cord inclines downward to the right with respect to the tire circumferential direction and the angle is regarded as minus (-) when the extending direction of carcass cord inclines upward to the right with respect to the tire circumferential direction, when the tire is viewed from the inner-surface side. In a case where there are a plurality of applicable carcass plies, a carcass ply on the outermost side in the tire radial direction is preferably measured. FIG. 2 shows a case where $A_2$ is plus (+). Moreover, in a case where a main body part and a turn-up part of the carcass are present at the tire maximum width position, carcass cords of the main body part shall be subjected to be measured. Besides, in a case where its value is a plus value, the symbol "+" may be omitted.

A carcass ply for which $A_2$ is to be measured is present so that the carcass ply extends from a tire center line toward both sides in a tire width direction, and the carcass ply shall extend so that at least one side thereof is beyond a tire maximum width position. At this time, the other side of the carcass ply may or may not be beyond the tire maximum width position. In a case where a main body part and a turn-up part of the carcass ply are present at the tire maximum width position, $A_2$ is measured for a carcass cord of the main body part. Moreover, there are cases where no turn-up part of the carcass ply is present at the tire maximum width position and where a turn-up part of the carcass ply is present only on one side in the tire width direction. Also in these cases, A2 is measured for a carcass cord of the main body part.

For the main body part and the turn-up part of the carcass ply, for example, the following cases are assumed:

a: a case where turn-up parts are present on both sides of the main body part in the tire width direction;
b: a case where the main body part of the carcass ply extends to the maximum width positions on both sides in the tire width direction and a turn-up part is present only on one side of the main body part in the tire width direction (no turn-up part is present on the other side of the main body part in the tire width direction);
c: a case where the main body part of the carcass ply extends only to the maximum width position on one side in the tire width direction and a turn-up part is present only on one side of the main body part in the tire width direction (the main body part does not extend to the maximum width position on the other side in the tire width direction and no turn-up part is present on the other side in the tire width direction);
d: a case where the main body part of the carcass ply extends to the maximum width positions on both sides in the tire width direction and no turn-up part is present on any of both sides of the main body part in the tire width direction; and
e: a case where the main body part of the carcass ply extends only to the maximum width position on one side in the tire width direction and no turn-up part is present on any of both sides of the main body part in the tire width direction.

In each of the above-described cases a to e, $A_2$ is measured as follows. That is, in the cases a, b, and d, $A_2$ is measured at two positions of the main body part. At least one of these values of $A_2$ has only to satisfy a predetermined requirement. On the other hand, in the cases c and e, $A_2$ is measured at one position of the main body part. The $A_2$ needs to satisfy a predetermined requirement.

A "carcass cord varying in its extending direction" mean a carcass cord satisfying the above-described inequality (1), that is, $|A_2 - A_1| > 0$.

A "reinforcing layer" means a member that is provided on the outer side in a tire radial direction with respect to a carcass and on the inner side in the tire radial direction with respect to a tread and that is responsible for a hooping effect of suppressing protrusion of a tire due to internal pressure or rotation and a role in receiving and mitigating an input from a road surface. The reinforcing layer is composed of at least one reinforcing layer ply that comprises a plurality of reinforcing layer cords and a topping rubber covering the reinforcing layer cords. Moreover, in the present specification, among the at least one reinforcing layer ply, a reinforcing layer ply arranged on the innermost side in the tire radial direction is referred to as an inner-side reinforcing layer ply. Specific examples of the reinforcing layer include a belt, a band, and the like.

A "belt" is one of reinforcing layers and is composed of at least one belt ply. A plurality of belt cords constituting a belt ply are arranged substantially parallel to each other, and an extending direction of belt cord inclines at 10° or higher relative to a tire circumferential direction. The belt comprises a joint part on the circumference of the tire. Here, the wording "substantially parallel" means that a difference in angle of an extending direction of each belt cord with respect to a tire circumferential direction is within a range of $\pm 3°$.

A "band" is one of reinforcing layers and is composed of at least one band ply. A band cord constituting a band ply is arranged in a state where the band cord is helically wound in a tire circumferential direction, and an angle at which an extending direction of band cord inclines relative to a tire circumferential direction remains within a range of $\pm 5°$. The band does not comprise any joint part on the circumference of the tire. Among bands, there are a full band covering the entire tread and an edge band covering only an edge part of the tread.

"$A_{RF}$" means an angle, in degrees, at which an extending direction of reinforcing layer cord of a reinforcing layer ply inclines from a tire circumferential direction and is expressed in a range of higher than -90° and +90° or lower, where the angle is regarded as plus (+) when the extending direction of carcass cord inclines downward to the right with respect to the tire circumferential direction and the angle is regarded as minus (-) when the extending direction of carcass cord inclines upward to the right with respect to the tire circumferential direction, when the tire is viewed from the inner-surface side. FIG. 2 shows a case where $A_{RF}$ is minus (-). Besides, in a case where its value is a plus value, the symbol "+" may be omitted.

<Measuring method>

"30°CE*c" is a complex elastic modulus at 30°C, in MPa, of a rubber composition constituting a cap tread and is measured using a dynamic viscoelasticity measuring device (for example, EPLEXOR series manufactured by gabo Systemtechnik GmbH), under a condition of a temperature at 30°C, a frequency of 10 Hz, an initial strain of 5%, a dynamic strain of $\pm 1\%$, and an extension mode. A sample is a vulcanized rubber composition having a length of 20 mm, a width of 4 mm, and a thickness of 1 mm. When a sample is prepared by being cut out from a tire, a length direction of the sample is configured to coincide with a tire circumferential direction and a thickness direction of the sample is configured to coincide with a tire radial direction.

Each of "$A_1$ and $A_2$" is determined as an average of angles measured for four different cords. Selection of the four cords is performed preferably by selecting arbitrary four cords, more preferably by selecting four cords spaced at equal intervals of approximately 90° in a tire circumferential direction. In this case, although there is no need to use the same cord for measurement of $A_1$ and $A_2$, it is further preferable that a cord used for measurement of $A_1$ is the same as a cord used for measurement of $A_2$.

"$A_{RF}$" is determined as an average of angles measured for four different cords. Selection of the four cords is performed preferably by selecting arbitrary four cords, more preferably by selecting four cords spaced at equal intervals of approximately 90° in a tire circumferential direction.

A "glass transition temperature of a rubber component" means a static glass transition temperature of each rubber component calculated by a differential scanning calorimeter (for example, Q200 manufactured by TA Instruments Japan Inc.).

A "styrene content" is calculated by pyrolysis gas chromatography or NMR measurement ($^1$H-NMR or $^{13}$C-NMR). For a component amount such as a "styrene content", there is a true value that does not depend on any measuring methods, unlike physical property values such as a complex elastic modulus (E*) and the like. Therefore, it is preferable to use a measuring method that is as highly accurate as possible. Besides, in the present specification, "pyrolysis gas chromatography" refers to a method of heating a sample by a pyrolysis device, separating individual components contained in a gas-phase component generated by this heating from one another using a separation column, and analyzing each isolated component.

A "vinyl content (1,2-bond butadiene unit amount)" is calculated by pyrolysis gas chromatography or NMR measurement ($^1$H-NMR or $^{13}$C-NMR). Also for a "vinyl content", there is a true value that does not depend on any measuring methods, like a "styrene content". Therefore, it is preferable to use a measuring method that is as highly accurate as possible.

A "cis content (cis-1,4-bond butadiene unit amount)" is a value measured by infrared absorption spectrometry in accordance with JIS K 6239-2:2017 or NMR measurement ($^1$H-NMR or $^{13}$C-NMR) and is applied to a rubber component having a repeating unit derived from butadiene such as, for example, a BR and the like. Also for a "cis content", there is a true value that does not depend on any measuring methods, like a "styrene content". Therefore, it is preferable to use a measuring method that is as highly accurate as possible.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "nitrogen adsorption specific surface area ($N_2SA$) of carbon black" is measured according to JIS K 6217-2:2017.

A "nitrogen adsorption specific surface area ($N_2SA$) of silica" is measured by a BET method according to ASTM D3037-93.

An "average primary particle size" is values calculated by an arithmetic mean of particle sizes of 400 particles which are photographed with a transmission or scanning electron microscope. In a case that the particle is in a spherical shape, a diameter of the sphere is defined as a particle size, and in cases of shapes other than the spherical shape, an equivalent circle diameter (positive square root of "$4 \times$ (area of particle)$/\pi$") calculated from a microscope image is defined as a particle size.

A "plasticizing agent" is a material giving a rubber component plasticity and is a component extracted from a rubber composition using acetone. Moreover, examples of the plasticizing agent include a plasticizing agent that is liquid (in a liquid state) at 25°C and a plasticizing agent that is solid at 25°C. However, the plasticizing agent shall not include wax and stearic acid commonly used in the tire industry.

A "content of a plasticizing agent" also includes an amount of a plasticizing agent that is contained in a rubber component extended by the plasticizing agent.

A "softening point of a resin component" is a temperature at which a sphere drops when the softening point specified in JIS K 6220-1:2015 7.7 is measured with a ring and ball softening point measuring device.

An embodiment will be described below in further detail. However, the following descriptions are illustrative for explaining the present invention, and the present invention is not limited to the content of these descriptions. Moreover, although the embodiment will be described by appropriately using the drawings, the drawings are merely illustrative.

<Tire>

A tire in FIG. 1 consists of a tread 1, a sidewall 2, and a bead part 3 and comprises a cap tread 5, a base tread 6, a carcass 7, and a reinforcing layer 10. The bead part comprises a bead apex 3a and a bead core 3b. The reinforcing layer 10 is composed of a belt 8 and a band 9. The carcass 7 is composed of one carcass ply that comprises a plurality of carcass cords and a topping rubber covering the carcass cords. The belt 8 is composed of one belt ply that comprises a plurality of belt cords and a topping rubber covering the belt cords. The band 9 is composed of one band ply that comprises a plurality of band cords and a topping rubber covering the band cords. In the tire, the belt ply constituting the belt 8 is an inner-side reinforcing layer ply.

The carcass 7 is composed of one carcass ply that comprises a plurality of carcass cords and a topping rubber covering the carcass cords. The belt 8 is composed of one belt ply that comprises a plurality of belt cords and a topping rubber covering the belt cords. The band 9 is composed of one band ply that comprises a plurality of band cords and a topping rubber covering the band cords. A tire maximum width position is denoted by P.

In the tire in FIG. 1, although the carcass 7 may be composed of a plurality of carcass plies, the carcass 7 is composed of preferably a smaller number of carcass plies, more preferably one carcass ply, from the viewpoint of a reduction of a tire weight. Although the belt 8 may be composed of a plurality of belt plies, the belt 8 is composed of preferably a smaller number of belt plies, more preferably one belt ply, from the viewpoint of a reduction of a tire weight. Although the band 9 may be composed of a plurality of band plies, the band 9 is composed of preferably a smaller number of band plies, more preferably one band ply, from the viewpoint of a reduction of a tire weight. Besides, both the belt 8 and the band 9 constitute the reinforcing layer 10. Although the reinforcing layer 10 may be composed of a plurality of reinforcing layer plies, the reinforcing layer 10 is composed of preferably a smaller number of reinforcing layer plies, preferably one reinforcing layer ply, from the viewpoint of a reduction of a tire weight.

In the tire of the present embodiment, the reinforcing layer may comprise both a belt and a band or may consist of a belt or a band. Among them, the reinforcing layer preferably consists of a belt.

FIG. 2 is a view schematically showing a tread pattern of a tire relating to one embodiment of the present invention. In FIG, 2, W represents a tire width direction, C represents a tire circumferential direction, TW represents a tread ground-contacting width.

In the cap tread relating to the present embodiment, there are a plurality of circumferential grooves extending continuously in a tire circumferential direction and a plurality of land parts partitioned off by the circumferential grooves and tread ground-contacting ends. Although there are four circumferential grooves 4 in FIG. 2, the present invention is not limited to such an aspect, and the number of circumferential grooves 4 may be one, two, three, four, or five or more. Although there are a plurality of lateral grooves 11 in the tire in FIG. 2, the present invention is not limited to such an aspect, and only circumferential grooves may be provided as a groove. From the viewpoint of adjusting a land ratio $L_1$ and a land ratio $L_2$, the tire of the present embodiment preferably has a plurality of lateral grooves.

A land ratio $L_1$, in %, of a predetermined region 20 including a tire equator is preferably 5.0% or more, more preferably 7.0% or more, further preferably 10.0% or more, particularly preferably 12.0% or more. Moreover, $L_1$ is preferably 25.0% or less, preferably 22.0% or less, further preferably 20.0% or less, particularly preferably 18.0% or less.

A land ratio $L_2$ of a pair of predetermined regions 21 including tread ends is preferably 5.0% or more, more preferably 7.0% or more, further preferably 10.0% or more, particularly preferably 12.0% or more. Moreover, $L_2$ is preferably 28.0% or less, preferably 26.0% or less, further preferably 24.0% or less, particularly preferably 22.0% or less.

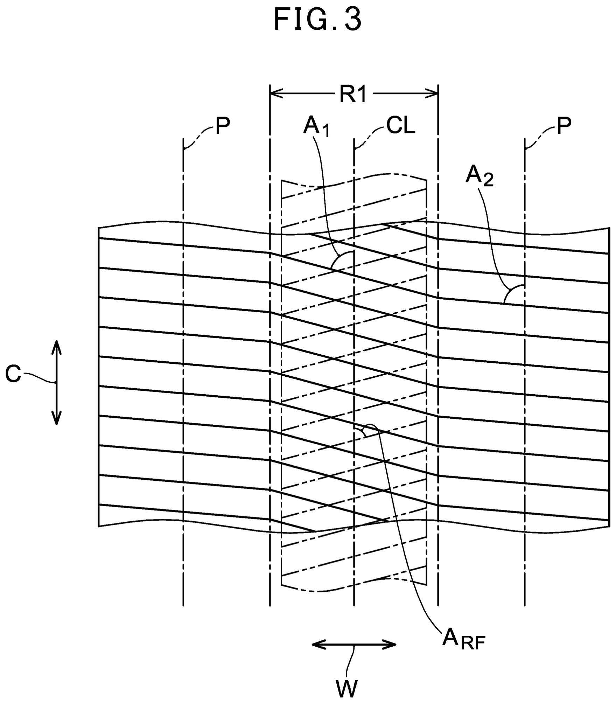

FIG. 3 shows a developed view of carcass cords constituting a carcass ply, which shows, from the inner-surface side of the tire, an angle formed between an extending direction of carcass cord and the tire circumferential direction. In FIG. 3, W for the horizontal direction indicates a tire width direction, and C for the vertical direction indicates a tire circumferential direction. The carcass ply comprises a plurality of carcass cords and a topping rubber covering the carcass cords, and the carcass cords are shown by the solid lines in FIG. 3. An angle at which an extending direction of carcass cord inclines from the tire circumferential direction in FIG. 3 is $A_2$ at one of tire maximum width positions P, becomes $A_1$ at a position on a tire center line after flexion of carcass cord, and then becomes $A_2$ at the other of tire maximum width positions after further flexion of carcass cord in the opposite direction. Besides, indicated by the two-dot chain line is an inner-side reinforcing layer ply that comprises a plurality of reinforcing layer cords and a topping rubber covering the reinforcing layer cords, specifically a belt ply.

The angle, in degrees, at which the extending direction of carcass cord inclines from the tire circumferential direction at the position on the tire center line is denoted by $A_1$, and the angle, in degrees, at which the extending direction of carcass cord inclines from the tire circumferential direction at the tire maximum width positions is denoted by $A_2$. Since the extending direction of carcass cord inclines downward to the right with respect to the tire circumferential direction when viewed form the inner-surface side of the tire, both of $A_1$ and $A_2$ have plus (+) values. On the other hand, an angle, in degrees, at which an extending direction of reinforcing layer cord inclines from the tire circumferential direction is denoted by $A_{RF}$. Since the extending direction of reinforcing layer cord inclines upward to the right with respect to the tire circumferential direction when viewed form the inner-surface side of the tire, $A_{RF}$ has a minus (-) value.

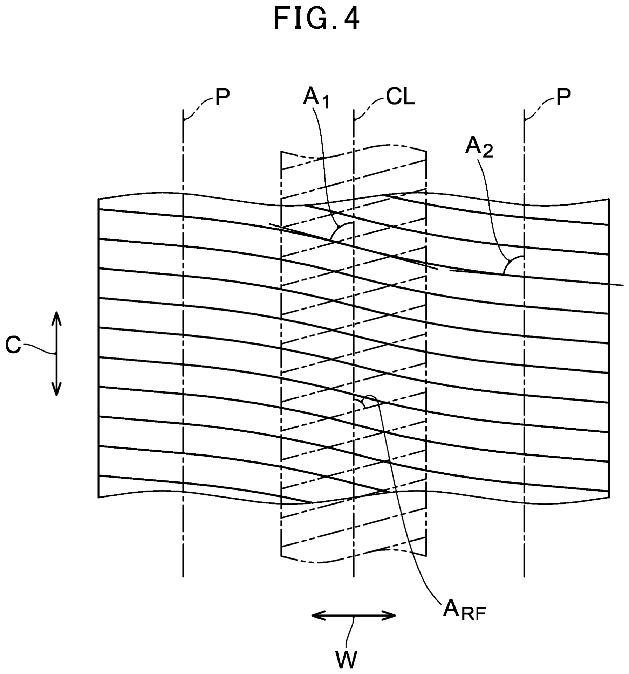

FIG. 4 is a developed view of carcass cords constituting a carcass ply, which represents an angle formed between an extending direction of carcass cord and the tire circumferential direction, and FIG. 4 is a variation of FIG. 3. FIG. 4 also shows an aspect viewed from the inner-surface side of the tire. The extending direction of carcass cord in FIG. 4 smoothly changes halfway. An angle at which an extending direction of carcass cord inclines from the tire circumferential direction in FIG. 4 is $A_2$ at one of the tire maximum width positions P, becomes $A_1$ at the position on the tire center line after the extending direction of carcass cord smoothly changes, and then becomes $A_2$ at the other of the tire maximum width positions after the extending direction of carcass cord further smoothly changes in the opposite direction. In FIG. 4, an angle, in degrees, at which a tangent line of carcass cord inclines from the tire circumferential direction at the position on the tire center line CL is denoted by $A_1$, and an angle, in degrees, at which a tangent line of carcass cord inclines from the tire circumferential direction at the tire maximum width position P is denoted by $A_2$. The other configurations are the same as in the case of FIG. 3.

In the tire of the present embodiment, a width of an R1 region in which an inclination angle of carcass cord that is $A_1$ on the tire center line is within a predetermined fluctuation range is preferably 30% or more of a tread ground-contacting width. The width of the R1 region is more preferably 50% or more, further preferably 70% or more, further preferably 90% or more, of the tread ground-contacting width. On the other hand, the width of the R1 region is preferably 100% or less of the tread ground-contacting width.

Materials of the carcass cord and the reinforcing layer cord are not particularly limited, examples of which include, for example, a metal cord (a steel cord and the like), an organic fiber cord, an inorganic fiber cord (excluding metal cords), and the like.

The metal cord may be a single monofilament cord (that is, a cord having a $1 \times 1$ structure and consisting of one filament) or may have a plurality of filaments. In a case where one metal cord has a plurality of filaments, the metal cord preferably has a twist structure in which these filaments are twisted together along their longitudinal direction. The twist structure is not particularly limited, and, for example, a single-twist metal cord having a $1 \times N$ structure or a layer-twist metal cord having an M+N structure can be used.

A filament constituting the organic fiber cord is not particularly limited, examples of which include, for example, a polyester fiber, a nylon fiber, an aramid fiber, a polyketone fiber, a polyparaphenylene acrylate fiber, a polyacrylate fiber, a rayon fiber, a cellulose fiber, a carbon fiber, and the like. Among them, a polyester fiber is preferable. These organic fibers may be formed of a synthetic fiber, a biomass-derived fiber, a recycled/regenerated fiber, or the like. These organic fibers may be used alone, or two or more thereof may be used in combination. Besides, the organic fiber cord can be one formed by twisting together a plurality of yarns obtained by twisting a plurality of filaments together.

(Inequality (1))

In the present embodiment, a value on the right side in the inequality (1) is a value higher than 0. That is, $|A_1 - A_2| > 0$ is satisfied since $A_1$ and $A_2$ are at least different from each other in the tire of the present embodiment. In the present embodiment, a value of $|A_1 - A_2|$ is not particularly limited as long as it is higher than 0, but the value is usually lower than 60° or may be lower than 50°, lower than 40°, lower than 30°, lower than 20°, or 10° or lower. On the other hand, the value is preferably higher than 1°, more preferably higher than 3°, further preferably 5° or higher.

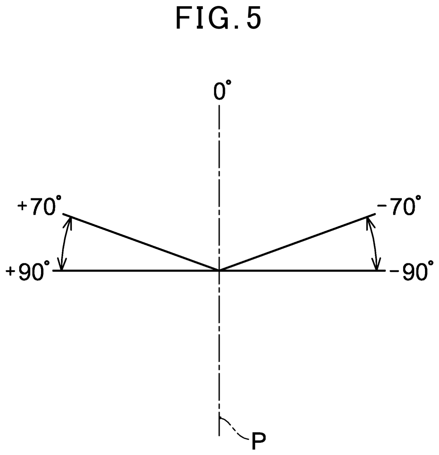

Moreover, $A_2$ is preferably +70° or higher and +90° or lower or -70° or lower and higher than -90°. FIG. 5 shows, as a schematic view of a carcass cord constituting a carcass ply which is represented from the inner-surface side of the tire, a preferred range of angle formed between an extending direction of carcass cord and the tire circumferential direction. The phrase "$A_2$ is +70° or higher and +90° or lower or -70° or lower and higher than -90°" means that the extending direction of carcass cord is within a range of the arched double arrow in FIG. 5. When the range of $A_2$ is as described above, it is considered that the effects of the present invention can be improved. For $A_2$ that is +70° or higher and +90° or lower, its lower limit is more preferably 75° or higher, further preferably 80° or higher, whereas its upper limit is more preferably 85° or lower. For $A_2$ that is -70° or lower and higher than -90°, its upper limit is more preferably -75° or lower, further preferably -80° or lower, whereas its lower limit is more preferably -85° or higher.

(Inequality (2))

In the present embodiment, $L_1/L_2$ is greater than 0.30. $L_1/L_2$ is preferably greater than 0.40, more preferably greater than 0.50, further preferably greater than 0.60, particularly preferably greater than 0.70, from the viewpoint of the effects of the present invention. Moreover, a lower limit value of $L_1/L_2$ can be, but not particularly limited to, less than 1.50, less than 1.30, less than 1.10, or the like.

(Inequality (3))

In the inequality (3), a value of K is 310. The value of K is preferably 320, preferably 330, more preferably 335, further preferably 340, further preferably 350, further preferably 400. On the other hand, an upper limit of the value of K is, but not particularly limited to, usually about 800 or is about 700 or about 600.

(30°CE*c)

Although a complex elastic modulus at 30°C, 30°CE*c, of a rubber composition constituting the cap tread is not particularly limited as long as it satisfies the inequality (3), it is preferably 2.5 MPa or more, more preferably 3.0 MPa or more, more preferably 3.5 MPa or more, further preferably 4.0 MPa or more, particularly preferably 4.5 MPa or more. On the other hand, 30°CE*c is preferably 20.0 MPa or less, more preferably 18.0 MPa or less, further preferably 16.0 MPa or less, particularly preferably 14.0 MP or less.

Besides, 30°CE*c can be appropriately adjusted depending on types or compounding amounts of a rubber component, a filler, a plasticizing agent, and the like which will be described below. For example, 30°CE*c can be increased by increasing an amount of the filler in the rubber composition, by decreasing a content of the plasticizing agent, and the like.

(ARF)

In at least any of the reinforcing layer plies, $A_{RF}$ that is an angle at which the extending direction of reinforcing layer cord inclines from the tire circumferential direction is preferably different from $A_1$, and particularly, the inclination direction at $A_{RF}$ from the tire circumferential direction is preferably a direction opposite to the inclination direction at $A_1$ from the tire circumferential direction. This is because twist of the carcass ply that is arranged in a biased manner on the inner side of the tread in the tire radial direction can be canceled.

A reinforcing layer comprising a reinforcing layer ply for which an angle, in degrees, at which an extending direction of reinforcing layer cord inclines from the tire circumferential direction is $A_{RF}$ is preferably composed of one reinforcing layer ply or is preferably composed of a belt ply.

<Rubber composition constituting cap tread>

A rubber composition constituting a cap tread of a pneumatic tire relating to the present embodiment (which is hereinafter referred to as the "rubber composition relating to the present embodiment") will be described. Besides, in a case where a tread comprises a base tread on the inner side of the cap tread in the tire radial direction, a rubber composition constituting the base tread can be prepared by appropriately compounding a rubber component, a filer, a plasticizing agent, other compounding agents, and the like which will be described below and by appropriately adjusting compounding amounts thereof.

(Rubber component)

A rubber component preferably comprises a diene-based rubber. As the diene-based rubber, any rubber components can be appropriately used which are commonly used in the tire industry. Specifically, examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. The diene-based rubbers may be used alone, or two or more thereof may be used in combination. The rubber composition relating to the present embodiment preferably comprises an SBR and more preferably comprises an SBR and a BR.

(SBR)

An SBR is not particularly limited, and an unmodified solution-polymerized SBR (S-SBR), an unmodified emulsion-polymerized SBR (E-SBR), and the like can be used. Among them, the S-SBR is preferable. Moreover, modified SBRs (a modified S-SBR, a modified E-SBR) and the like can also be used. Examples of the modified SBR include an SBR modified at its terminal and/or main chain using a compound having a functional group described below (a modifying agent); a modified SBR coupled with tin, a silicon compound, etc. (a modified SBR of condensate or having a branched structure, etc.); and the like. Furthermore, hydrogenated ones of these SBRs (hydrogenated SBRs) and the like can also be used. The SBRs may be used alone, or two or more thereof may be used in combination.

The functional group of the modifying agent is preferably a functional group including at least one element selected from the group consisting of silicon, nitrogen, and oxygen. Examples of such a functional group include, for example, an amino group, an amido group, a silyl group, an alkoxysilyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, and the like, and an amino group and /or alkoxysilyl group are preferable. The amino group is preferably an amino group that is substituted with one or two alkyl groups having 1 to 6 carbon atoms. Specific examples of the alkoxysilyl include, for example, trimethoxysilyl, triethoxysilyl, triisopropoxysilyl, dimethoxymethylsilyl, diethoxymethylsilyl, dimethylmethoxysilyl, dimethylethoxysilyl, and the like.

An oil-extended SBR or a non-oil extended SBR can be used as an SBR. As the SBR that can be used in the present embodiment, those commercially available from JSR Corporation, Sumitomo Chemical Co., Ltd., Ube Corporation, Asahi Kasei Corporation, ZS Elastomer Co., Ltd., ARLANXEO, etc. can be used.

A styrene content of an SBR is preferably 20% by mass or more, more preferably 25% by mass or more, further preferably 30% by mass or more. Moreover, the styrene content of the SBR is preferably 60% by mass or less, more preferably 50% by mass or less, further preferably 45% by mass or less. Besides, the styrene content of the SBR is measured by the above-described measuring method.

A vinyl content of an SBR is preferably greater than 10 mol%, more preferably greater than 15 mol%, further preferably greater than 20 mol%, from the viewpoint of securing hysteresis loss. Moreover, the vinyl content of the SBR is preferably less than 40 mol%, more preferably less than 35 mol%, further preferably less than 30 mol%, from the viewpoint of fuel efficiency. Besides, the vinyl content of the SBR is measured by the above-described measuring method.

A weight-average molecular weight (Mw) of an SBR is preferably greater than 100,000, more preferably greater than 300,000, further preferably greater than 500,000, particularly preferably greater than 1,000,000, from the viewpoint of the effects of the present invention. Moreover, Mw is preferably less than 2,500,000, more preferably less than 2,200,000, further preferably less than 2,000,000, from the viewpoints of cross-linking uniformity, etc. Besides, the Mw of the SBR is measured by the above-described measuring method.

A content of an SBR in the rubber component is preferably 40% by mass or more, more preferably 50% by mass or more, further preferably 60% by mass or more, particularly preferably 70% by mass or more. Moreover, the content of the SBR in the rubber component is preferably 90% by mass or less, more preferably 85% by mass or less, further preferably 80% by mass or less.

(BR)

A BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available form Zeon Corporation, UBE Corporation, JSR Corporation, etc. can be used. When the rubber composition comprises a high cis BR, a low temperature property and abrasion resistance can be improved. A cis content of a high cis BR is preferably greater than 90 mol%, more preferably greater than 95 mol%, further preferably 96 mol% or more. Besides, the cis content of the BR is measured by the above-described measuring method.

The rare-earth-based BR is a BR synthesized using a rare-earth element-based catalyst, a vinyl content of the rare-earth-based BR is preferably less than 1.8 mol%, more preferably less than 1.6 mol%, further preferably 1.5 mol% or less, and a cis content of the rare-earth-based BR is preferably greater than 95 mol%, more preferably 96 mol% or more, further preferably 97 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such an SPB-containing BR, those commercially available from UBE Corporation, etc. can be used.

Examples of the modified BR include BRs modified with the same functional groups as described above for the SBR, and the like, and a modified butadiene rubber (modified BR) modified at its terminal and/or main chain with a functional group comprising at least one element selected from the group consisting of silicon, nitrogen, and oxygen can also be appropriately used.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.

A weight-average molecular weight (Mw) of a BR is preferably greater than 300,000, more preferably greater than 350,000, further preferably greater than 400,000, from the viewpoint of abrasion resistance. Moreover, it is preferably less than 2,000,000, more preferably less than 1,000,000, further preferably less than 700,000, from the viewpoints of cross-linking uniformity, etc. Besides, the Mw can be calculated by the above-described method.

A content of a BR in the rubber component is preferably 5% by mass or more, more preferably 8% by mass or more, further preferably 10% by mass or more, particularly preferably 15% by mass or more. Moreover, the content of the BR in the rubber component is preferably 40% by mass or less, more preferably 30% by mass or less, further preferably 25% by mass or less.

(Isoprene-based rubber)

As an isoprene-based rubber, for example, those common in the tire industry can be used, such as an isoprene rubber (IR), a natural rubber, and the like. Examples of the natural rubber include not only an unmodified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. The isoprene-based rubbers may be used alone, or two or more thereof may be used in combination.

The NR is not particularly limited, and those common in the tire industry can be used, examples of which include, for example, SIR20, RSS#3, TSR20, and the like.

A content of an isoprene-based rubber in the rubber component is preferably 50% by mass or less, more preferably 40% by mass or less, further preferably 30% by mass or less, further preferably 20% by mass or less, further preferably 10% by mass or less, particularly preferably 5% by mass or less. The rubber component may not comprise any isoprene-based rubber. Moreover, the content of the isoprene-based rubber in the rubber component can be, for example, 1% by mass or more, 3% by mass or more, or the like.

(Other rubber components)

The rubber component may comprise a rubber component other than diene-based rubbers (non-diene-based rubbers) as long as it does not affect the effects of the present invention. As a non-diene-based rubber, a rubber component commonly used in the tire industry can be used, examples of which include, for example, a butyl-based rubber, an ethylene propylene rubber, a polynorbornene rubber, a silicone rubber, a polyethylene chloride rubber, a fluororubber (FKM), an acrylic rubber (ACM), a hydrin rubber, and the like. The other rubber components may be used alone, or two or more thereof may be used in combination. Moreover, besides the above-described rubber components, the rubber composition may or may not comprise a known thermoplastic elastomer.

(Rubber component synthesized from recycle-derived/biomass-derived raw material)

A monomer that is a structural unit of a synthetic rubber such as an IR, an SBR, a BR, and the like may be one derived from mineral resources such as petroleum, a natural gas, and the like or one recycled from a rubber product such as a tire and the like or a non-rubber product such as polystyrene and the like. Examples of monomers obtained by recycle (recycled monomers) include, but not particularly limited to, a recycle-derived polyisoprene, a recycle-derived butadiene, a recycle-derived aromatic vinyl compound, and the like. Examples of the above-described butadiene include 1,2-butadiene and 1,3 butadiene. Examples of the aromatic vinyl compound include, but not particularly limited to, styrene and the like. Among them, a recycle-derived polyisoprene (recycled isoprene), a recycle-derived butadiene (recycled butadiene), and/or a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be one derived from biomass. In the present specification, "biomass" refers to a material derived from natural resources such as plants and the like. Examples of biomass include, but not particularly limited to, for example, agricultural, forest and fishery products and sugar, wood waste, a plant residue after acquisition of a useful component, a plant-derived ethanol, a biomass naphtha, and the like.

Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant, and the like. A microbial fermentation is representative of biological conversion, and examples of chemical and/or physical conversion include a method using a catalyst, a method using a high heat, a method using a high pressure, a method using an electromagnetic wave, a method using a critical liquid, and combinations thereof.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02 \times 10^{23}$), there are about $6.02 \times 10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere and the like was absorbed by plants and the like to be fixed, all of $^{14}C$ elements, which were also contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1 \times 10^{-12}$ mol% based on the entire carbon atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference that becomes a reference for the $^{14}C$ concentration. As a specific reference material, an oxalic acid standard provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass, the $^{14}C$ concentration shows a value of approximately 110 pMC as, currently, under a normal condition, it is often not equal to 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value and the like, that is, a material such as a rubber having a high biomass ratio and the like, for a rubber composition.

(Filler)

The rubber composition relating to the present embodiment preferably comprises a filler. The filler preferably comprises silica and more preferably comprises carbon black and silica. Moreover, the filler may be a filler consisting of carbon black and silica.

<Silica>

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component like a semiconductor, a tire, a desiccant, a filtering material like diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably greater than 100 $m^2/g$, more preferably greater than 150 $m^2/g$, further preferably greater than 170 $m^2/g$, from the viewpoint of reinforcing property. Moreover, it is preferably less than 250 $m^2/g$, more preferably less than 200 $m^2/g$, further preferably less than 180 $m^2/g$, from the viewpoints of heat generation and processability. Besides, the $N_2SA$ of silica is measured by the above-described measuring method.

An average primary particle size of silica is preferably greater than 10 nm, more preferably greater than 12 nm, further preferably greater than 15 nm, from the viewpoint of reinforcing property. Moreover, the average primary particle size is preferably less than 25 nm, more preferably less than 20 nm. Besides, the average primary particle size of silica is measured by the above-described measuring method.

A content of silica based on 100 parts by mass of the rubber component is preferably 30 parts by mass or more, more preferably 40 parts by mass or more, further preferably 50 parts by mass or more, further preferably 60 parts by mass or more, further preferably 70 parts by mass or more, particularly preferably 80 parts by mass or more, from the viewpoint of wet grip performance. Moreover, the content of silica based on 100 parts by mass of the rubber component is preferably less than 150 parts by mass, more preferably less than 120 parts by mass, further preferably less than 110 parts by mass.

A content ratio of silica in the filler is preferably greater than 50% by mass, more preferably greater than 60% by mass, further preferably greater than 70% by mass, particularly preferably greater than 80% by mass. Moreover, an upper limit value of the content ratio of silica in the filler is, but not particularly limited to, preferably less than 98% by mass, more preferably less than 96% by mass, from the viewpoint of compounding carbon black and the like.

<<Carbon black>>

Examples of carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Chemical & Material Co., Ltd., Columbia Carbon Corporation., etc. can be used. The carbon black may be used alone, or two or more thereof may be used in combination.

Moreover, as carbon black other than the above-described carbon black, carbon black made from a biomass material such as lignin and the like, or a recovered carbon black obtained by pyrolyzing a product comprising carbon black such as a tire and the like followed by refining may be used from the viewpoints of a life cycle assessment, etc.

In the present specification, the term "recovered carbon black" refers to carbon black obtained by pulverizing a product such as a used tire comprising carbon black and the like and baking the pulverized product, in which, after the product is subjected to oxidative combustion by heating in the air, a ratio of a mass of ash (ash content), which is a component that does not combust, is 13% by mass or more according to a thermal weight measurement method of JIS K 6226-2:2003. That is, a ratio of a mass (carbon amount) of a weight lost content due to the oxidative combustion of the recovered carbon black is 87% by mass or less. The recovered carbon black may be expressed by rCB.

A recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface.

As the recovered carbon black, those commercially available from Strebl Green Carbon Pte Ltd., LD Carbon, etc. can be used.

A nitrogen adsorption specific surface area ($N_2SA$) of carbon black is preferably greater than 80 $m^2$/g, more preferably greater than 90 $m^2$/g, further preferably greater than 100 $m^2$/g, particularly preferably greater than 110 $m^2$/g, from the viewpoint of reinforcing property. Moreover, it is preferably less than 200 $m^2$/g, more preferably less than 150 $m^2$/g, further preferably less than 120 $m^2$/g, from the viewpoints of heat generation and processability. Besides, the $N_2SA$ of carbon black is measured by the above-described method.

An average primary particle size of carbon black is preferably 15 nm or more, more preferably 18 nm or more, further preferably 20 nm or more. Moreover, the average primary particle size is preferably 80 nm or less, more preferably 50 nm or less, further preferably 40 nm or less. Besides, the average primary particle size of carbon black is measured by the above-described method.

A content of carbon black is preferably greater than 1 part by mass, more preferably greater than 3 parts by mass, further preferably greater than 5 parts by mass, based on 100 parts by mass of the rubber component, in a case where carbon black whose average primary particle size is greater than 20 nm is compounded.

A content of carbon black is preferably greater than 10 parts by mass, more preferably greater than 20 parts by mass, further preferably greater than 30 parts by mass, based on 100 parts by mass of the rubber component, in a case where carbon black whose average primary particle size is 20 nm or less is compounded.

Moreover, an upper limit value of the content of the carbon black is preferably less than 80 parts by mass, more preferably less than 60 parts by mass, further preferably less than 50 parts by mass, based on 100 parts by mass of the rubber component, from the viewpoint of processability.

<Other fillers>

The filler may comprise another filler other than silica and carbon black. The other filler is not particularly limited, and as the other filler, those conventionally and commonly used in the tire industry can be compounded, such as, for example, aluminum hydroxide, calcium carbonate, alumina, clay, talc, and the like.

<Silane coupling agent>

Silica is preferably used in combination with a silane coupling agent. The silane coupling agent is not particularly limited, and examples of the silane coupling agent include, for example, a sulfide-based silane coupling agent such as bis(3-triethoxysilylpropyl)disulfide, bis(3-triethoxysilylpropyl)tetrasulfide, and the like; a mercapto-based silane coupling agent, such as 3-mercaptopropyltrimethoxysilane, 3-mercaptopropyltriethoxysilane, 2-mercaptoethyltrimethoxysilane, 2-mercaptoethyltriethoxysilane, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl)aminopropyltriethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Evonik Industries AG, Momentive Performance Materials, etc. can be used. The silane coupling agents may be used alone, or two or more thereof may be used in combination.

A content of a silane coupling agent is preferably greater than 3 parts by mass, more preferably greater than 5 parts by mass, based on 100 parts by mass of silica, from the viewpoint of enhancing dispersibility of silica. Moreover, it is preferably less than 15 parts by mass, more preferably less than 12 parts by mass, further preferably less than 10 parts by mass, from the viewpoints of cost and processability.

A content of a silane coupling agent based on 100 parts by mass of the rubber component is preferably greater than 2 parts by mass, more preferably greater than 3 parts by mass, further preferably greater than 4 parts by mass, from the viewpoint of enhancing dispersibility of silica. Moreover, it is preferably less than 12 parts by mass, more preferably less than 10 parts by mass, further preferably less than 8 parts by mass, from the viewpoint of preventing deterioration of abrasion resistance.

(Other compounding agents)

Compounding agents conventionally and commonly used in the tire industry, such as, for example, a plasticizing agent, processing aid, a vulcanized rubber particle, wax, stearic acid, an antioxidant, zinc oxide, a vulcanizing agent, a vulcanization accelerator, and the like, can appropriately be compounded in the rubber composition, in addition to the rubber component and the filler.

<<Plasticizing agent>>

A plasticizing agent is a material giving a rubber component plasticity and includes both a plasticizing agent that is in a liquid state at 25°C and a plasticizing agent that is solid at 25°C. Examples of the plasticizing agent include a resin component, oil, a liquid rubber, an ester-based plasticizing agent, and the like. These plasticizing agents may be ones derived from mineral resources such as petroleum, natural gas, and the like, ones derived from biomass, or ones derived from naphtha recycled from a rubber product or non-rubber product. Moreover, low-molecular-weight hydrocarbon components obtained by pyrolyzing used tires or products containing various components and performing extraction from the pyrolysate may be used as plasticizing agents. The plasticizing agents may be used alone, or two or more thereof may be used in combination.

(Resin component)

For the rubber composition relating to the present embodiment, a resin component may be used in combination. Resin components that can be used for the present embodiment are not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, or two or more thereof may be used in combination, respectively.

<<C9-based resin>>

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms, such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

<<C5-based resin>>

A "C5-based resin" refers to a resin obtained by polymerizing C5 fractions and may be one obtained by hydrogenating or modifying it. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

<<C5/C9-based resin>>

A "C5/C9-based resin" refers to a resin obtained by copolymerizing the C5 fraction and the C9 fraction and may be one obtained by hydrogenating or modifying it. As the C5/C9-based petroleum resin, for example, those commercially available from Tosoh Corporation, Zibo Luhua Hongjin New Material Group Co., Ltd, etc. can be used.

<<Dicyclopentadiene-based resin>>

A "dicyclopentadiene-based resin" refers to a resin comprising cyclopentadiene (CPD) and/or dicyclopentadiene (DCPD) as a monomer component having the largest content and may be one obtained by hydrogenating or modifying it. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

<<Aromatic vinyl-based resin>>

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying it. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

<<Coumarone-based resin>>

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

<<Indene-based resin>>

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

<<Terpene-based resin>>

A "terpene-based resin" refers to a resin comprising a terpene compound such as $\alpha$-pinene, $\beta$-pinene, limonene, dipentene, and the like as a monomer component, and may be one obtained by hydrogenating or modifying it. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

<<Rosin-based resin>>

A "rosin-based resin" refers to a resin comprising a rosin acid compound such as abietic acid, neoabietic acid, palustric acid, isopimaric acid, and the like, and may be one obtained by hydrogenating or modifying it. Example of the rosin-based resin include, but not particularly limited to, for example, a natural resin rosin, a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

<<Phenol-based resin>>

A "phenol-based resin" refers to a resin comprising a phenolic compound such as phenol, cresol, and the like as a monomer component, and may be one obtained by hydrogenating or modifying it. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

<<Softening point>>

A softening point of a resin component is preferably 60°C or higher, more preferably 70°C or higher, further preferably 80°C or higher, from the viewpoint of grip performance. Moreover, it is preferably 150°C or lower, more preferably 140°C or lower, further preferably 130°C or lower, from the viewpoints of processability and improvement in dispersibility of a filler in a rubber component. Besides, the softening point of the resin component is measured by the above-described measuring method.

<<Content>>

A content of a resin component when compounded based on 100 parts by mass of the rubber component is preferably greater than 5 parts by mass, more preferably greater than 10 parts by mass, further preferably greater than 15 parts by mass, from the viewpoint of the effects of the present invention. On the other hand, the content is preferably less than 50 parts by mass, more preferably less than 45 parts by mass, further preferably less than 40 parts by mass, from the viewpoint of suppression of heat generation.

(Plasticizing agent other than resin component)

Oil, a liquid rubber, and an ester-based plasticizing agent, which are plasticizing agents other than the resin component, will be described.

(Oil)

Examples of oil include, for example, mineral oils, vegetable oils, animal oils, and the like. Moreover, from the viewpoint of a life cycle assessment, one obtained by refining a waste oil after use for a rubber mixing machine or an engine or waste cooking oil used in a cooking facility may also be used. The oils may be used alone, or two or more thereof may be used in combination.

In the present specification, "mineral oil" refers to oil derived from mineral resources such as petroleum, natural gas, and the like. Examples of mineral oil include paraffinic oils (mineral oils), naphthenic oils, aromatic oils, and the like. Specific examples of the mineral oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, oils each having a low content of a polycyclic aromatic compound (PCA) can also be used. Examples of the oils each having a low content of a PCA include MES, TDAE, heavy naphthenic oil, and the like. The mineral oils may be used alone, or two or more thereof may be used in combination.

In the present specification, examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oils, a waste cooking oil obtained by recovering what was utilized as an edible oil, etc., and the like. Besides, the vegetable oil may be liquid or solid at 25°C. The vegetable oils may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at 25°C.

Whether the rubber composition comprises the above-described acylglycerol can be confirmed by, but not particularly limited to, $^1$H-NMR measurement. For example, a heavy chloroform in which a rubber composition containing triacylglycerol is immersed at 25°C for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, whale oils, oleyl alcohol that can be derived therefrom, and the like.

A content of oil when compounded based on 100 parts by mass of the rubber component is preferably greater than 5 parts by mass, more preferably greater than 10 parts by mass, further preferably 15 parts by mass or more, particularly preferably 20 parts by mass or more. Moreover, the content is preferably less than 80 parts by mass, more preferably less than 60 parts by mass, further preferably 40 parts by mass or less. Besides, the content of oil shall also include an amount of oil contained as an extending oil in a rubber component or oil contained in another component such as sulfur and the like.

(Liquid rubber)

A liquid rubber is a polymer in a liquid state at 25°C, examples of which include, for example, a liquid diene-based polymer, and the like. Examples of the liquid diene-based polymer include a liquid styrene-butadiene copolymer (liquid SBR), a liquid butadiene polymer (liquid BR), a liquid isoprene polymer (liquid IR), a liquid styrene-isoprene copolymer (liquid SIR), and the like. A number average molecular weight (Mn) of the liquid diene-based polymer, which is measured with a gel permeation chromatography (GPC) and calculated in terms of polystyrene, is preferably greater than 1000, more preferably greater than 3000. On the other hand, the Mn is preferably less than 100000, more preferably less than 15000, further preferably less than 10000. A Mn of the liquid rubber is a value measured with a gel permeation chromatography (GPC) and calculated in terms of polystyrene. As a liquid diene-based polymer, for example, products from Sartomer, Kuraray Co., Ltd., etc. can be used. The liquid rubber may be used alone, or two or more thereof may be used in combination.

(Ester-based plasticizing agent)

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agents may be used alone, or two or more thereof may be used in combination.

A total content of plasticizing agents based on 100 parts by mass of the rubber component is preferably 25 parts by mass or more, more preferably 30 parts by mass or more, further preferably 35 parts by mass or more, further preferably 40 parts by mass or more, further preferably 45 parts by mass or more, particularly preferably 50 parts by mass or more. Moreover, the total content of plasticizing agents based on 100 parts by mass of the rubber component is preferably 100 parts by mass or less, more preferably 90 parts by mass or less, further preferably 80 parts by mass or less.

<<Processing aid>>

Examples of processing aid include, for example, a fatty acid metal salt, a fatty acid amide, an amide ester, a silica surfactant, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably greater than 0.5 parts by mass, more preferably greater than 1 part by mass, further preferably greater than 1.5 parts by mass, from the viewpoint of exerting an effect of improving processability. Moreover, it is preferably less than 10 parts by mass, more preferably less than 8.0 parts by mass, further preferably less than 5.0 parts by mass, from the viewpoints of abrasion resistance and breaking strength.

<<Vulcanized rubber particle>>

The vulcanized rubber particle is a particle made of a vulcanized rubber. Specifically, a rubber powder specified in JIS K 6316:2017, and the like can be used. A recycled rubber powder produced from a pulverized product of a waste tire and the like is preferable from the viewpoints of consideration for environment and cost. The vulcanized rubber particle may be used alone, or two or more thereof may be used in combination.

The vulcanized rubber particle is not particularly limited and may be an unmodified vulcanized rubber particle or a modified vulcanized rubber particle.

As a commercially available product of a vulcanized rubber, for example, products manufactured by Lehigh Technologies, Muraoka Rubber Reclaiming Co., Ltd. etc. can be used.

<<Wax>>

Wax is not particularly limited, and any of those commonly used in the tire industry can be appropriately used, examples of which include, for example, a mineral-based wax, a plant-derived wax, and the like. The mineral-based wax refers to a wax derived from mineral resources such as oil, natural gas, and the like. The plant-derived wax refers to a wax derived from natural resources such as plants and the like. Among them, the mineral-based wax is preferable. Examples of the plant-derived wax include, for example, a rice bran wax, a carnauba wax, a candelilla wax, and the like. Examples of the mineral-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. The wax may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

<<Stearic acid>>

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 7 parts by mass, further preferably less than 5 parts by mass, from the viewpoint of vulcanization rate.

<<Antioxidant>>

Examples of the antioxidant include, but not particularly limited to, a naphthylamine-based antioxidant such as phenyl-$\alpha$-naphthylamine and the like; a diphenylamine-based antioxidant such as octylated diphenylamine, 4,4'-bis($\alpha,\alpha'$-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, or polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 0.8 parts by mass, further preferably 1.0 parts by mass or more. On the other hand, the content is preferably less than 7.0 parts by mass, more preferably less than 6.0 parts by mass, further preferably less than 5.0 parts by mass.

<<Zinc oxide>>

A content of zinc oxide when compounded based on 100 parts by mass of the rubber component is preferably greater than 0.8 parts by mass, more preferably greater than 1.0 parts by mass, further preferably 2.0 parts by mass or more, from the viewpoint of processability. On the other hand, the content is preferably less than 10 parts by mass, more preferably less than 7 parts by mass, further preferably less than 5 parts by mass, from the viewpoint of abrasion resistance.

<<Vulcanizing agent>>

A vulcanizing agent is not particularly limited, and known vulcanizing agents can be used, examples of which include, for example, organic peroxide, a sulfur-based vulcanizing agent, a resin vulcanizing agent, metallic oxide such as magnesium oxide and the like, etc. Among them, the sulfur-based vulcanizing agent is preferable. As the sulfur-based vulcanizing agent, for example, sulfur donors such as sulfur, morpholine disulfide, and the like, etc. can be used. Among them, it is preferable that sulfur is used. The vulcanizing agent can be used alone, or two or more thereof can be used in combination.

Examples of sulfur include a powdery sulfur, a precipitated sulfur, a colloidal sulfur, a surface-treated sulfur (an oil processing sulfur, a special sulfur treated with a dispersing agent, a masterbatch-type sulfur, and the like), an insoluble sulfur (an oil processing insoluble sulfur and the like), and the like, and any of them can be appropriately used. Among them, the powdery sulfur is preferable. As sulfur, for example, those manufactured and sold by Tsurumi Chemical Industry Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., and the like can be used.

A known organic crosslinking agent can also be used as a vulcanizing agent. Although the organic crosslinking agent is not particularly limited as long as it can form a crosslinking chain other than polysulfide bond, examples of the organic crosslinking agent include, for example, an alkylphenol-sulfur chloride condensate, sodium hexamethylene-1,6-bisthiosulfate dihydrate, 1,6-bis(N,N'-dibenzylthiocarbamoyldithio)hexane, dicumyl peroxide, and the like, and 1,6-bis(N,N'-dibenzylthiocarbamoyldithio)hexane is preferable. As these organic crosslinking agents, those commercially available from Taoka Chemical Co., Ltd., LANXESS, Flexsys, etc. can be used.

A content of a vulcanizing agent when compounded based on 100 parts by mass of the rubber component is preferably greater than 0.5 parts by mass, more preferably greater than 1.0 parts by mass, further preferably greater than 1.4 parts by mass. On the other hand, the content is preferably less than 6.0 parts by mass, more preferably less than 3.0 parts by mass, further preferably less than 2.0 parts by mass. When the content of the vulcanizing agent is within the above-described ranges, an appropriate reinforcing effect tends to be obtained. Besides, in a case where the vulcanizing agent includes a component other than sulfur like an oil-processing sulfur and the like, the content of the vulcanizing agent means a content of a sulfur component itself.

<<Vulcanization accelerator>>

A vulcanization accelerator is not particularly limited, and known vulcanization accelerators can be used, examples of which include, for example, sulfenamide-based, thiazole-based, guanidine-based, thiuram-based, thiourea-based, dithiocarbamic acid-based, aldehyde-amine-based or aldehyde-ammonia-based, imidazoline-based, and xanthate-based vulcanization accelerators. Among them, the sulfenamide-based vulcanization accelerator, the thiazole-based vulcanization accelerator, the guanidine-based vulcanization accelerator, and the thiuram-based vulcanization accelerator are preferable, the sulfenamide-based vulcanization accelerator and the thiazole-based vulcanization accelerator are more preferable, and the thiazole-based vulcanization accelerator is further preferable. As the vulcanization accelerator, for example, those manufactured and sold by Ouchi Shinko Chemical Industry Co., Ltd., Sanshin Chemical Industry Co., Ltd., etc., and the like can be used. The vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DZ), and the like. Examples of the thiazole-based vulcanization accelerator include, for example, 2-mercaptobenzothiazole (MBT) or salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Examples of the guanidine-based vulcanization accelerator include, for example, 1,3-diphenylguanidine (DPG), diorthotrilguanidine, orthotrilbiguanidine, and the like. Examples of the thiuram-based vulcanization accelerator include, for example, tetramethylthiuram monosulfide, tetramethylthiuram disulfide, tetrabenzylthiuram disulfide (TBzTD), and the like.

A content of a vulcanization accelerator based on 100 parts by mass of the rubber component is preferably greater than 1.0 parts by mass, more preferably greater than 2.0 parts by mass, further preferably greater than 2.5 parts by mass. On the other hand, the content is preferably less than 8.0 parts by mass, more preferably less than 7.0 parts by mass, further preferably less than 6.0 parts by mass. When the content of the vulcanization accelerator is within the above-described ranges, breaking strength and elongation tend to be able to be secured.

In the present specification, various materials each having a carbon atom (for example, a rubber, oil, a resin component, a vulcanization accelerator, an antioxidant, a surfactant, and the like) may be derived from carbon dioxide in the atmosphere. The compounds relating to the present embodiment can be obtained by converting carbon dioxide directly or converting methane obtained via a process of methanation by which methane is synthesized from carbon dioxide.

The rubber composition relating to the present embodiment can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and vulcanization accelerators; and a final kneading (F-kneading) step of adding the vulcanizing agent and the vulcanization accelerators to the kneaded product obtained in the base kneading step and kneading them. Additionally, the base kneading step can also be divided into multiple steps as necessary. In a case where the base kneading step is divided, a method of dividing the base kneading step may be: (1) a method of previously kneading a part of compounding agents and additives into a masterbatch and then adding the remaining compounding agents and additives to the obtained masterbatch to knead them; (2) a method of kneading all of compounding agents and additives to be kneaded in the base kneading step at once, and then remilling the kneaded product one or more times; or the like. In the above-described method (1), the number of masterbatches is not limited and may be two or more. Moreover, when the number of masterbatches is two or more, all of compounding agents and additives used in the base kneading step may be allocated to any of the masterbatches.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step.

A pneumatic tire relating to the present embodiment can be produced by a usual method using an unvulcanized rubber composition obtained as described above. That is, first, an unvulcanized rubber composition is extruded into a shape of a cap tread to obtain an unvulcanized cap tread. The unvulcanized cap tread thus obtained is attached together with other tire members such as a base tread and the like on a tire molding machine to form an unvulcanized tire by a usual method. At this time, $L_1$, $L_2$, and a structure of the carcass cord are configured to become predetermined ones. Moreover, as necessary, a reinforcing layer is configured to have a predetermined structure. The unvulcanized tire thus obtained is heated and pressurized in a vulcanizer, whereby the pneumatic tire relating to the present embodiment can be produced. Examples of vulcanization conditions include, but not particularly limited to, for example, a method of vulcanizing at 150°C to 200°C for 10 to 40 minutes.

<Applications>

The pneumatic tire relating to the present embodiment can be used for any application and can be used as a tire for a passenger car, a tire for a large passenger car, a tire for a large SUV, a racing tire, a motorcycle tire, a heavy-duty tire, or a run-flat tire. Besides, the "tire for a passenger car" refers to a tire that is presupposed to be mounted to a vehicle running with four wheels and that has a maximum load capacity of less than 1400 kg. Moreover, the "heavy-duty tire" refers to a tire having a maximum load capacity of 1400 kg or more. Moreover, in the present specification, the tire can be used as an all-season tire and a summer tire, as well as a winter tire such as a studless tire and the like.

EXAMPLE

Hereinafter, examples considered to be preferable in implementing the present invention (Examples) will be described, though the scope of the present invention is not limited to these Examples. Results, which are calculated based on evaluation methods described below considering a tire having a cap tread and a tire structure, the tire being obtained in accordance with each Tables using various chemicals described below, are shown in the lower part of each Table.

<Various chemicals>

Chemicals used in Examples and Comparative examples are collectively shown below.

SBR1: SBR produced by the following Production example (S-SBR, Tg: -35°C, styrene content: 40% by mass, vinyl content: 25 mol%, Mw: 1,900,000, non-oil-extended)
SBR2: SLR6430 manufactured by Trinseo PLC (S-SBR, styrene content: 40% by mass, vinyl content: 24 mol%, Mw: 1,010,000, oil-extended product comprising 37.5 parts by mass of oil content based on 100 parts by mass of rubber component)
SBR3: Nipol NS540 manufactured by Zeon Corporation (S-SBR, styrene content: 42% by mass, oil-extended product comprising 25 parts by mass of oil content based on 100 parts by mass of rubber component)
BR: Ubepol BR150B manufactured by UBE Corporation (unmodified BR, cis content: 96 mol%, Mw: 440,000)
Carbon black 1: Show Black N220 manufactured by Cabot Japan K.K. ($N_2SA$: 111 $m^2$/g, average primary particle size: 22 nm)
Carbon black 2: Prototype carbon black ($N_2SA$: 180 $m^2$/g, average primary particle size: 16 nm)
Silica: Ultrasil VN3 manufactured by Evonik Industries AG ($N_2SA$: 175 $m^2$/g, average primary particle size: 18 nm)
Coupling agent (silane coupling agent): NXT manufactured by Evonik Industries AG (3-octanoylthio-propyltriethoxysilane)
Resin component: SYLVATRAXX (Registered Trademark) 4401 manufactured by Kraton Corporation (copolymer of $\alpha$-methylstyrene and styrene, softening point: 85°C)
Liquid rubber: Ricon 100 manufactured by Cray Valley (liquid SBR, styrene content: 25% by mass, vinyl content: 70 mol%, Mn: 4500)
Oil: VivaTec 500 manufactured by H&R Group (TDAE oil)
Wax: OZOACE 0355 manufactured by Nippon Seiro Co., Ltd. (paraffin wax)
Antioxidant 1: Antigen 6C manufactured by Sumitomo Chemical Co., Ltd. (N-(1,3-dimethylbutyl)-N'-phenyl-p-phenylenediamine)
Antioxidant 2: Nocrac FR manufactured by Ouchi Shinko Chemical Industry Co., Ltd. (2,2,4-trimethyl-1,2-dihydroquinoline polymer)
Stearic acid: Bead stearic acid "CAMELLIA" manufactured by NOF CORPORATION
Zinc oxide: Ginrei R manufactured by Toho Zinc Co., Ltd.
Sulfur: HK-200-5 manufactured by Hosoi Chemical Industry Co., Ltd. (5% oil-containing powdery sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: TBzTD manufactured by Performance Additives (tetrabenzylthiuram disulfide)
Vulcanization accelerator 3: Nocceler D manufactured by Ouchi Shinko Chemical Industry Co., Ltd. (1,3-diphenylguanidine (DPG))
Vulcanization accelerator 4: Nocceler NS manufactured by Ouchi Shinko Chemical Industry Co., Ltd. (di-2-benzothiazolyl disulfide)

(Production example: production of SBR1)

Cyclohexane, tetrahydrofuran, styrene, and 1,3-butadiene are charged into an autoclave reactor subjected to nitrogen purge. A ratio of styrene and 1,3-butadiene is adjusted so that a styrene content is 40% by mass. After adjusting the temperature of the contents in the reactor to 20°C, n-butyllithium is added to initiate polymerization. Polymerization is performed under an adiabatic condition, and the temperature reaches 80°C of the maximum temperature. After confirming production of a polymer having a Mw of 1900000 by GPC, a polymerization solution is poured into 4L of ethanol to collect a precipitate. After blow-drying the obtained precipitate, it is dried under reduced pressure at 80°C/10 Pa or lower until a drying loss becomes 0.1% to obtain an SBR1.

<Examples and Comparative examples>

According to compounding formulations shown in each Table, using a 1.7 L Banbury mixer, chemicals other than sulfur and vulcanization accelerators are kneaded for 5 minutes until a temperature reaches a discharge temperature at 160°C to obtain a kneaded product. Next, the sulfur and vulcanization accelerators are added to the obtained kneaded product, and the mixture is kneaded using a twin-screw open roll for 4 minutes until the temperature reaches 105°C to obtain an unvulcanized rubber composition for cap tread. Besides, in Table 2, a rubber content in an oil-extended rubber is described in the columns for rubbers, and the oil content in the oil-extended rubber is added in the column for oil.

The obtained unvulcanized rubber composition is extruded into a shape of a cap tread with an extruder equipped with a mouthpiece having a predetermined shape, which is then attached together with other tire members while adjusting it to have a predetermined tire structure, to prepare an unvulcanized tire. The obtained unvulcanized tire is press-vulcanized under a condition at 150°C for 35 minutes, thereby producing each test tire (tire size: 235/40R18).

Tire structures in each Table are explained. In tires in Table 1, $A_1$ is +75° and $A_2$ is +85° for an inclination angle of a carcass cord, a land ratio $L_1$ of a region nearest to a tire equator is 15.0%, and a land ratio $L_2$ of a pair of regions including tread ends is 21.0%. Therefore, $|A_2 - A_1| = 10°$ for the inequality (1), and $L_1 - L_2 \times 0.3 = 8.7$ for the inequality (2). Moreover, in tires in Table 2, $A_1$ is +75° and $A_2$ is +80° for an inclination angle of a carcass cord, a land ratio $L_1$ of a region nearest to a tire equator is 15.0%, and a land ratio $L_2$ of a pair of regions including tread ends is 15.0%. Therefore, $|A_2 - A_1| = 5°$ for the inequality (1), and $L_1 - L_2 \times 0.3 = 10.5$ for the inequality (2). Besides, the carcass cords are polyester cords.

In each Table, a value of $30°CE^*c \times K / \{|A_2 - A_1| \times (L_1 - L_2 \times 0.3)\}$ relating to the inequality (3) can be compared with a constant K. That is, when the value is greater than the constant K, the inequality (3) is satisfied.

<Durability>

Each test tire is mounted on a drum tester, a time taken until the tire is damaged and a speed at which the tire is damaged after the speed is gradually increased from 220 km per hour in increments of 10 km per hour in a state where a vertical load of 4.82 kN is applied to the tire are measured. Results are indicated as indexes with the reference Comparative example (which is Comparative example 1 in Table 1 or Comparative example 2 in Table 2) being as 100. The results show that the higher the numerical value is, the longer the time taken until the tire is damaged is and the more excellent durability is.

Table 1

|  | Example | | | Comparative example |
| --- | --- | --- | --- | --- |
|  | 1 | 2 | 3 | 1 |
| Compounding amount (parts by mass) | | | | |
| SBR1 | 80 | 80 | 80 | 80 |
| BR | 20 | 20 | 20 | 20 |
| Carbon black 1 | 5 | 5 | 5 | 5 |
| Silica | 100 | 80 | 70 | 65 |
| Coupling agent | 8.0 | 6.4 | 5.6 | 5.2 |
| Resin component | 20 | 20 | 20 | 20 |
| Oil | 30 | 30 | 30 | 30 |
| Wax | 2.0 | 2.0 | 2.0 | 2.0 |
| Antioxidant 1 | 2.5 | 2.5 | 2.5 | 2.5 |

(continued)

|  | Example | | | Comparative example |
| --- | --- | --- | --- | --- |
|  | 1 | 2 | 3 | 1 |
| Compounding amount (parts by mass) | | | | |
| Antioxidant 2 | 1.0 | 1.0 | 1.0 | 1.0 |
| Stearic acid | 2.0 | 2.0 | 2.0 | 2.0 |
| Zinc oxide | 2.0 | 2.0 | 2.0 | 2.0 |
| Sulfur | 1.2 | 1.2 | 1.2 | 1.2 |
| Vulcanization accelerator 1 | 2.5 | 2.5 | 2.5 | 2.5 |
| Vulcanization accelerator 2 | 0.5 | 0.5 | 0.5 | 0.5 |
| Vulcanization accelerator 3 | 2.5 | 2.5 | 2.5 | 2.5 |
| 30°CE*c (MPa) | 6.5 | 4.6 | 3.9 | 3.6 |
| 30°CE*c × $|A_2 - A_1|$ × $(L_1 - L_2 × 0.3)$ (Inequality (3)) | 566 | 400 | 339 | 313 |
| Durability index | 135 | 115 | 105 | 100 |

Table 2

|  | Example | | | Comparative example |
| --- | --- | --- | --- | --- |
|  | 4 | 5 | 6 | 2 |
| Compounding amount (parts by mass) | | | | |
| SBR2 | 50 | 50 | 50 | 50 |
| SBR3 | 30 | 30 | 30 | 30 |
| BR | 20 | 20 | 20 | 20 |
| Carbon black 2 | 35 | 35 | 35 | 35 |
| Silica | 100 | 60 | 50 | 40 |
| Coupling agent | 8.0 | 4.8 | 4.0 | 3.2 |
| Liquid rubber | 8 | 8 | 8 | 8 |
| Oil | 45 | 45 | 45 | 45 |
| Wax | 2.5 | 2.5 | 2.5 | 2.5 |
| Antioxidant 1 | 3.0 | 3.0 | 3.0 | 3.0 |
| Antioxidant 2 | 1.0 | 1.0 | 1.0 | 1.0 |
| Stearic acid | 2.0 | 2.0 | 2.0 | 2.0 |
| Zinc oxide | 2.0 | 2.0 | 2.0 | 2.0 |
| Sulfur | 1.0 | 1.0 | 1.0 | 1.0 |
| Vulcanization accelerator 4 | 2.5 | 2.5 | 2.5 | 2.5 |
| Vulcanization accelerator 3 | 2.5 | 2.5 | 2.5 | 2.5 |
| 30°CE*c (MPa) | 12.0 | 9.0 | 6.0 | 4.0 |
| 30°CE*c × $|A_2 - A_1|$ × $(L_1 - L_2 × 0.3)$ (Inequality (3)) | 630 | 473 | 315 | 210 |
| Durability index | 175 | 150 | 120 | 100 |

REFERENCE SIGNS LIST

1. Tread
2. Sidewall
3. Bead part
3a. Bead apex
3b. Bead core

4. Circumferential groove
5. Cap tread
6. Base tread
7. Carcass
8. Belt
9. Band
10. Reinforcing layer
11. Lateral groove
20. Predetermined region including tire equator
21. Pair of predetermined regions including tread ends
CL. Tire center line or tire equator
W. Tire width direction
C. Tire circumferential direction
P. Tire maximum width position
Te. Tread end
TW. Tread ground-contacting width
$A_1$. Angle at which extending direction of carcass cord inclines from tire circumferential direction at position on tire center line
$A_2$. Angle at which extending direction of carcass cord inclines from tire circumferential direction at tire maximum width position
$A_{RF}$. Angle at which extending direction of reinforcing layer cord inclines from tire circumferential direction

**Claims**

1. A pneumatic tire comprising

   a carcass,
   a reinforcing layer arranged on the outer side of the carcass in a tire radial direction, and
   a cap tread arranged on the outer side of the reinforcing layer in the tire radial direction,
   wherein the carcass is composed of at least one carcass ply that comprises a plurality of carcass cords and a topping rubber covering the carcass cords, and
   wherein $A_1$, $A_2$, $L_1$, $L_2$, 30°CE*c, and K satisfy the following inequalities (1), (2), and (3),

$$(1)\ |A_2 - A_1| > 0$$

$$(2)\ L_1 / L_2 > 0.30$$

$$(3)\ 30°CE^*c > K / \{|A_2 - A_1| \times (L_1 - L_2 \times 0.3)\}$$

   (where K is 310, preferably 320, preferably 330)
   where $A_1$ represents an angle, in degrees, at which an extending direction of carcass cord of at least any carcass ply among the carcass plies inclines from a tire circumferential direction at a position on a tire center line, $A_2$ represents an angle, in degrees, at which the extending direction of carcass cord of the at least any carcass ply among the carcass plies inclines from the tire circumferential direction at a tire maximum width position, $L_1$ represents a land ratio, in %, of a predetermined region of the cap tread including a tire equator, $L_2$ represents a land ratio, in %, of a pair of predetermined regions including tread ends of the cap tread, 30°CE*c represents a complex elastic modulus at 30°C of a rubber composition constituting the cap tread, and K represent a constant.

2. The pneumatic tire of claim 1, wherein K is 335, preferably 340, more preferably 350, further preferably 370, further preferably 400.

3. The pneumatic tire of claim 1 or 2, wherein the rubber composition constituting the cap tread comprises a rubber component, and the rubber component comprises a styrene-butadiene rubber.

4. The pneumatic tire of any one of claims 1 to 3, wherein the rubber composition constituting the cap tread comprises a resin component.

5. The pneumatic tire of any one of claims 1 to 4,

wherein the reinforcing layer is composed of at least one reinforcing layer ply that comprises a plurality of reinforcing layer cords and a topping rubber covering the reinforcing layer cords, and
wherein $A_1$ is different from $A_{RF}$, where $A_{RF}$ represents an angle, in degrees, at which an extending direction of reinforcing layer cord of at least any reinforcing layer ply of the reinforcing layer inclines from the tire circumferential direction.

6. The pneumatic tire of claim 5, wherein the inclination direction at $A_{RF}$ from the tire circumferential direction is a direction opposite to the inclination direction at $A_1$ from the tire circumferential direction.

7. The pneumatic tire of claim 5 or 6, wherein the reinforcing layer comprising the reinforcing layer ply in which an angle, in degrees, at which an extending direction of reinforcing layer cord inclines from the tire circumferential direction is $A_{RF}$ is composed of one reinforcing layer ply.

8. The pneumatic tire of any one of claims 5 to 7, wherein the reinforcing layer ply in which the angle, in degrees, at which the extending direction of reinforcing layer cord inclines from the tire circumferential direction is $A_{RF}$ is a belt ply.

9. The pneumatic tire of any one of claims 5 to 8, wherein the at least one reinforcing layer consists of a belt.

10. The pneumatic tire of any one of claims 1 to 9, wherein the carcass is composed of one carcass ply.

11. The pneumatic tire of any one of claims 1 to 10, wherein $A_2$ is +70° or higher and +90° or lower, preferably +75° or higher and +85° or lower, more preferably +80° or higher and +85° or lower, or is -70° or lower and higher than -90°, preferably -75° or lower and -85° or higher, more preferably -80° or lower and -85° or higher.

# FIG. 1

# FIG.2

# FIG. 3

# FIG. 4

# FIG.5

Europäisches
Patentamt
European
Patent Office
Office européen
des brevets

# EUROPEAN SEARCH REPORT

Application Number

EP 25 21 3350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 357 154 A1 (SUMITOMO RUBBER IND [JP]) 24 April 2024 (2024-04-24) | 1-4 | INV. B60C1/00 |
| Y | * paragraphs [0059], [0069]; claims 1-15; figures 1-4; tables 1,2 * | 5-11 | B60C9/07 B60C9/08 B60C9/20 |
| Y | US 3 414 447 A (TRAVERS GEORGES LOUIS) 3 December 1968 (1968-12-03) * claims 1-11; figures 1-22 * | 5-11 | B60C11/00 B60C11/03 |
| Y | US 2019/152262 A1 (MATSUDA JUN [JP] ET AL) 23 May 2019 (2019-05-23) * claims 1-10; figures 1-3 * | 5-11 | |

TECHNICAL FIELDS SEARCHED (IPC)

B60C

The present search report has been drawn up for all claims

| Place of search | Date of completion of the search | Examiner |
|---|---|---|
| Munich | 7 April 2026 | Carneiro, Joaquim |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 21 3350

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2026

| Patent document cited in search report | | Publication date | Patent family member(s) | | Publication date |
|---|---|---|---|---|---|
| EP 4357154 | A1 | 24-04-2024 | EP | 4357154 A1 | 24-04-2024 |
| | | | JP | 2024060451 A | 02-05-2024 |
| US 3414447 | A | 03-12-1968 | NONE | | |
| US 2019152262 | A1 | 23-05-2019 | CN | 109070639 A | 21-12-2018 |
| | | | DE | 112017002411 T5 | 24-01-2019 |
| | | | JP | 6878774 B2 | 02-06-2021 |
| | | | JP | 2017202754 A | 16-11-2017 |
| | | | US | 2019152262 A1 | 23-05-2019 |
| | | | WO | 2017195889 A1 | 16-11-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023084469 A
- WO 2021123530 A
- JP 2009002594 A
- EP 3427975 A
- JP 6856781 B
- EP 3173251 A

**Non-patent literature cited in the description**

- *Akita Prefectural University Web Journal B*, 2019, vol. 6, 216-222
- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193